# EUROPEAN PATENT APPLICATION

(11) **EP 3 811 829 A1**
(43) Date of publication of application: **28.04.2021**
(21) Application number: 20199431.6
(22) Date of filing: 30.09.2020
(51) Int. Cl.: A47J 31/18, A47J 31/56

(54) **A COFFEE MAKER COMPRISING AN INFRARED SENSOR**

(30) Priority: 21.10.2019 TR 201916205
(71) Applicant: Arçelik Anonim Sirketi, 34445 Istanbul (TR)
(72) Inventor: KANTAS, Murat, 34445 ISTANBUL (TR); DONERKAYALI, Arda, 34445 ISTANBUL (TR); ERGUN, Ali, 34445 ISTANBUL (TR)

(57) **Abstract**

The present invention relates to a coffee maker (1) comprising a coffee pot (2) wherein the brewing process is performed; a heater (3); an infrared sensor (4) which is composed of a transmitter (6) and a receiver (7), which is positioned above the coffee pot (2) and which enables the height of the liquid mixture and the foam in the coffee pot (2) to be measured during the brewing process; a control unit (5) which controls the brewing process; and a protective cover (8) which allows the passage of infrared light and which covers the lower surface of the infrared sensor (4) facing the coffee pot (2).

## Description

The present invention relates to a coffee maker wherein the brewing process is controlled by means of an infrared sensor.

In automatic coffee makers suitable for brewing Turkish coffee, the heating process has to be stopped just before reaching the boiling point in order to prevent the foam from overflowing and to obtain the desired taste and consistency. In the coffee maker, an infrared sensor disposed at the top section of the coffee pot, measuring the height of the foam is used in order to detect the rising of the foam during the brewing process. A protective cover which is made of especially glass or plastic material allowing the passage of infrared light is placed below the infrared sensor for protection against water and steam. This protective cover interferes with the signals emitted from the transmitter of the infrared sensor and returns to the receiver therein after being reflected. Furthermore, in the coffee maker, the steam generated in the coffee pot during the brewing process condenses on the bottom surface of the sensor protective cover, forming water droplets and the signals sent from the transmitter of the infrared sensor reflect back from the water droplets without reaching the interior of the coffee pot. This problem is known as crosstalk interference or crosstalk attenuation. Since the sizes and the distribution of the water droplets vary according to the brewing conditions, said crosstalk attenuation problem cannot be solved by means of calibration and the infrared sensor cannot measure the height accurately and the desired control over the brewing process cannot be obtained.

The patent documents No. EP1763311 (B1) and EP2088904 (B1) disclose a coffee maker comprising an infrared sensor which decides on the completion of the brewing process by detecting the change in the height of the foam which occurs as a result of the foaming of the Turkish coffee brewed in the coffee pot.

The aim of the present invention is the realization of a coffee maker wherein an infrared sensor is used to control the brewing process and the crosstalk attenuation problem in the infrared sensor is solved.

The coffee maker realized in order to attain the aim of the present invention comprises a protective cover allowing the passage of infrared light, covering the bottom side of the infrared sensor which faces the interior of the coffee pot. A separator which extends between the projections of the transmitter and the receiver of the infrared sensor on the protective cover is mounted to the protective cover. The separator creates a barrier between the signals sent from the transmitter and the signals received by the transmitter, thus solving the crosstalk attenuation problem.

In an embodiment of the present invention, the separator protrudes from the bottom surface of the protective cover by an L length and extends towards the coffee pot. In this embodiment, especially the crosstalk attenuation effect created by the water droplets accumulated on the bottom surface of the protective cover is eliminated.

The coffee maker realized to attain the aim of the present invention is illustrated in the attached figure, where:

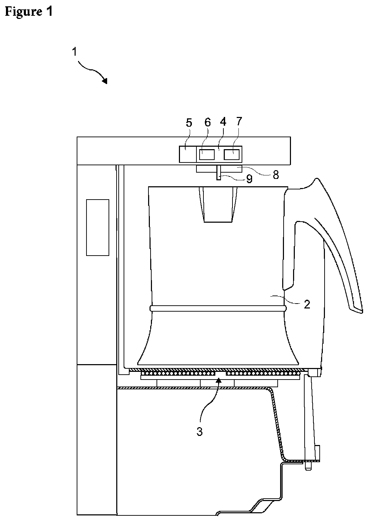

Figure 1 - is the schematic view of a coffee maker.

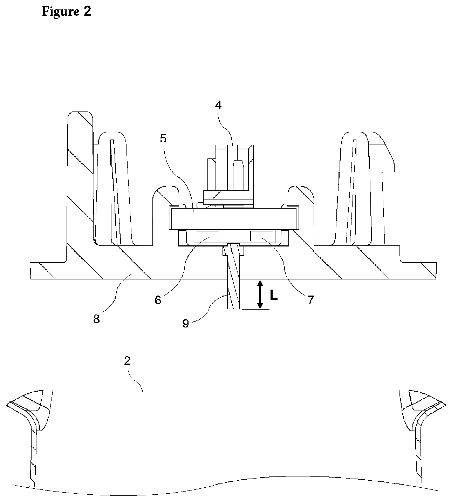

Figure 2 - is the cross-sectional view of the infrared sensor, the protective cover and the coffee pot.

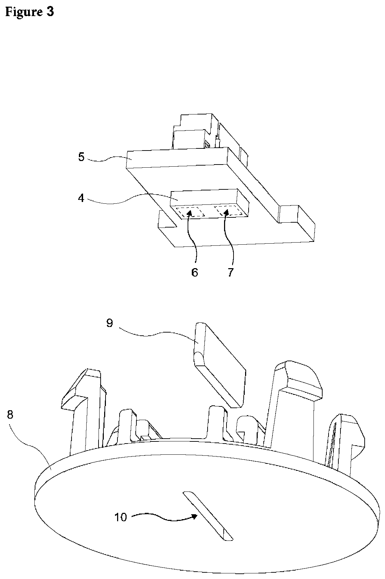

Figure 3 - is the exploded view of the infrared sensor, the protective cover and the separator.

The elements illustrated in the figures are numbered as follows:
1. Coffee maker
2. Coffee pot
3. Heater
4. Infrared sensor
5. Control unit
6. Transmitter
7. Receiver
8. Protective cover
9. Separator
10. Slot

### L: Length

The coffee maker (1) comprises a coffee pot (brewing pot) (2) wherein water and coffee is added for forming a mixture and performing the brewing process; a heater (3) which enables the coffee pot (2) to be heated for a predetermined time period; an infrared sensor (4) which is positioned above the coffee pot (2) so as to face the interior of the coffee pot (2) and which enables the height of the liquid mixture and the foam to be measured during the brewing process; and a control unit (5) such as a microprocessor which controls the brewing process based on the data received from the infrared sensor (4).

The infrared sensor (4) comprises a transmitter (6) which emits infrared beams by means of at least one LED and a receiver (7) which detects the infrared light reflecting from the surface of the foam in the coffee pot (2).

The coffee maker (1) further comprises a protective cover (8) which is produced from glass or plastic material allowing the passage of infrared light, which covers the bottom side of the infrared sensor (4) facing the coffee pot (2), which prevents the steam rising from the interior of the coffee pot (2) during the brewing process from damaging the infrared sensor (4) and which allows the infrared beams to be emitted from the transmitter (6) into the coffee pot (2) and the beams reflected from the liquid foam surface in the coffee pot (2) to reach the receiver (7).

The coffee maker (1) of the present invention comprises a separator (9) which is integrated to the protective cover (8), which extends between the projections of the transmitter (6) and the receiver (7) of the infrared sensor (4) on the protective cover (8) and which prevents the occurrence of the crosstalk attenuation by forming a barrier between the signals emitted from the transmitter (6) and the signals received by the receiver (7).

In an embodiment of the present invention, the separator (9) protrudes from the bottom surface of the protective cover (8) by a predetermined L length and extends towards the coffee pot (2). The separator (9) decreases the crosstalk attenuation resulting from the infrared beams reflected from the water droplets which form due to the condensation on the bottom surface of the protective cover (8) facing the coffee pot (2).

The length (L) of the part of the separator (9) which protrudes from the bottom surface of the separator (8) and extends towards the coffee pot (2) is determined based on the potential size of the water droplets which can be formed on the protective cover (8) as a result of condensation.

The separator (9) is preferably produced from a material which does not allow the passage of infrared light and the thickness of the separator (9) is determined based on the horizontal distance between the transmitter (6) and the receiver (7).

In an embodiment of the present invention, the protective cover (8) comprises a slot (10) which extends between the projections of the transmitter (6) and the receiver (7), enabling the separator (9) to be mounted to the protective cover (8). The separator (9) is rectangular and is mounted to the protective cover (8) by being inserted into the slot (10) from one of the long edges thereof. In other embodiments of the present invention, the separator (9) is fixed to the protective cover (8) by means of adhesion or plastic injection.

In the coffee maker (1) of the present invention, a separator (9) which separates the transmitter (6) and the receiver (7) and creates a barrier between the transmitted and reflected signals is integrated to the protective cover (8) of the infrared sensor (4) which enables the brewing process to be controlled. The separator (9) ensures the elimination of the crosstalk attenuation problem which cannot be calibrated due to the condensation formed on the bottom surface of the protective cover (8) facing the coffee pot (2). Thus, the infrared sensor (4) is enabled to make precise measurements under changing brewing conditions and Turkish coffee having the desired taste and consistency can be prepared without overflowing.

## Claims

1. A coffee maker (1) comprising a coffee pot (2) wherein the brewing process is performed; a heater (3); an infrared sensor (4) which is positioned above the coffee pot (2) so as to face the interior of the coffee pot (2) and which enables the height of the liquid mixture and the foam in the coffee pot (2) to be measured during the brewing process; a control unit (5) which controls the brewing process based on the data received from the infrared sensor (4); a transmitter (6) and a receiver (7) which form the infrared sensor (4); and a protective cover (8) which is produced from a material allowing the passage of infrared light and which covers the lower surface of the infrared sensor (4) facing the coffee pot (2), **characterized by**
- a separator (9) which is integrated to the protective cover (8), which extends between the projections of the transmitter (6) and the receiver (7) of the infrared sensor (4) on the protective cover (8) and which prevents the occurrence of the crosstalk attenuation by forming a barrier between the signals emitted from the transmitter (6) and the signals received by the receiver (7).

2. A coffee maker (1) as in Claim 1, **characterized by** the separator (9) which protrudes from the bottom surface of the protective cover (8) by a predetermined L length and extends towards the coffee pot (2).

3. A coffee maker (1) as in Claim 1 or Claim 2, **characterized by** the separator (9) which is produced from a material which does not allow the passage of infrared light.

4. A coffee maker (1) as in Claim 1 or Claim 2, **characterized by** the protective cover (8) comprising a slot (10) which extends between the projections of the transmitter (6) and the receiver (7) and enables the separator (9) to be mounted to the protective cover (8).
